# EUROPEAN PATENT SPECIFICATION

(11) **EP 3 882 201 B1**
(45) Date of publication and mention of the grant of the patent: **16.07.2025**
(21) Application number: 20213502.6
(22) Date of filing: 11.12.2020
(51) Int. Cl.: B66B 5/00

(54) **FAULT DIAGNOSIS METHOD, READABLE STORAGE MEDIUM, ELECTRONIC DEVICE AND FAULT DIAGNOSIS SYSTEM FOR INTERACTION BETWEEN ELEVATOR SYSTEM AND MACHINE PASSENGER**
FEHLERDIAGNOSEVERFAHREN, LESBARES SPEICHERMEDIUM, ELEKTRONISCHE VORRICHTUNG UND FEHLERDIAGNOSESYSTEM ZUR INTERAKTION ZWISCHEN DEM AUFZUGSSYSTEM UND EINEM MASCHINENFAHRGAST
PROCÉDÉ DE DIAGNOSTIC DE DÉFAILLANCE, SUPPORT DE STOCKAGE LISIBLE, DISPOSITIF ÉLECTRONIQUE ET SYSTÈME DE DIAGNOSTIC DE DÉFAILLANCE POUR UNE INTERACTION ENTRE UN SYSTÈME D'ASCENSEUR ET UN PASSAGER DE MACHINE

(30) Priority: 16.03.2020 CN 202010181024
(43) Date of publication of application: 22.09.2021
(73) Proprietor: Otis Elevator Company, Farmington, Connecticut 06032 (US)
(72) Inventor: ZHANG, Yu, Shanghai, 200335 (CN); WANG, Shenhong, Shanghai, 200335 (CN)
(74) Representative: Dehns

(56) References cited:
- EP-A1- 3 357 852
- EP-A1- 3 409 630
- EP-B1- 3 409 630
- JP-A- 2018 188 273
- KR-A- 20160 043 642

## Description

### FIELD OF THE INVENTION

The application relates to the technical field of elevators, and more specifically, to a fault diagnosis method and matched readable storage medium, electronic device and fault diagnosis system for interaction between elevator system and machine passenger.

### BACKGROUND OF THE INVENTION

Passenger transport apparatus are very common in daily life as a tool for improving passenger walking between landings or shortening passenger walking distance. By way of example, escalators and elevators usually used between landings of commercial buildings and moving walkways usually used in large airports are particularly common.

At the same time, with the development of Internet technology and machine intelligence technology, automatic machines with a certain degree of intelligence also appears in everyday life, such as automatic delivery vehicles, robots for take-out, robots for meal delivering, robots for expressage, and the like. Such automatic machines, when performing their functional responsibilities, inevitably need to use elevators within various buildings or plants.

As a result, plenty of technologies development focusing on achieving interaction between elevator systems and machine passengers have become industry focus. In the development of such technologies, a wide variety of technical faults would inevitably arise, as such techniques involve software, hardware and their communication processes of two types of products (i.e., machine passengers and elevators), for example, its fault may involve faults of wireless signal, faults of robot navigation system, problems of disconnection between the robot and the elevator system, problems of dispatching module of the robot's control hardware, or even problems of the elevator system, thus causing considerable difficulty for the diagnostic work of maintenance personnel. The maintenance personnel need extremely high professional literacy and various auxiliary tools in order to make accurate diagnosis and debugging. In addition, certain problems may even be difficult to find from the maintenance provided by a single aspect of a product manufacture. For example, after a fault has occurred, it is found that the command sending of the machine passenger is normal after tested by the manufacture of the machine passenger, while at this moment, the problem may be with the communication between the machine passenger and the elevator, may also be with the receipt of the command by the elevator system, and may further be with the execution of the command by the elevator system. Similarly, after a fault, it is found that all components and controllers of the elevator are normal after tested by the elevator manufacturer, while at this moment, the fault may originate from other locations. Therefore, it will consume large amount of manpower and material sources to check each apparatus in the interaction system one by one.

### SUMMARY OF THE INVENTION

The application aims to provide a fault diagnosis method, a readable storage medium, an electronic device and a fault diagnosis system for interaction between an elevator system and a machine passenger, so as to realize rapid and accurate diagnosis when a fault exists in the interaction between the elevator system and the machine passenger.

To achieve at least one object of the present application, in accordance with one aspect of the present application, there is provided a fault diagnosis method for interaction between an elevator system and a machine passenger for diagnosing a fault in the interaction between the machine passenger and the elevator system via an interaction management apparatus, wherein the fault diagnosis method comprises: acquiring diagnostic information from the elevator system and the interaction management apparatus; simulating an interaction process between the machine passenger and the elevator system via the interaction management apparatus based on the acquired diagnostic information; and judging a fault type of interaction between the machine passenger and the elevator system based on the simulated interaction process.

Optionally, the diagnostic information comprises one or more of the following information: a communication network signal, a communication connection state of a simulated machine passenger with the elevator system, exception information of the elevator system, exception information pf the interaction management apparatus, and request information and response information sent by the simulated machine passenger and the elevator system via the interaction management apparatus.

Optionally, the diagnostic information is acquired directly from the interaction management apparatus, and the diagnostic information is acquired from the elevator system; or the diagnostic information for the elevator system is indirectly acquired from the interaction management apparatus via communication of the interaction management apparatus with the elevator system.

Optionally, the interaction process of the simulated machine passenger with the elevator system via the interaction management apparatus comprises one or more of the following steps: simulating a network interaction process; simulating a hardware interaction process; and simulating a software interaction process.

Optionally, simulating the network interaction process comprises: simulating a process during which a machine passenger establishes a connection with a network; and/or simulating the hardware interaction process comprises: simulating a process during which the machine passenger establishes a connection with the interaction management apparatus; and simulating a process during which the interaction management apparatus establishes a connection with the elevator system; and/or simulating the software interaction process comprises: simulating a process during which the machine passenger has information interaction with the interaction management apparatus; and simulating a process during which the interaction management apparatus has information interaction with the elevator system.

Optionally, simulating an interaction process of the machine passenger with the elevator system via the interaction management apparatus comprises one or more of the following steps: simulating an interaction process between a machine passenger and the interaction management apparatus; simulating an interaction process between the elevator system and the interaction management apparatus.

Optionally, simulating the interaction process between the machine passenger and the interaction management apparatus comprises one or more of the following steps: simulating a process during a machine passenger establishes a connection with a network; simulating a process during which a machine passenger establishes a connection with the interaction management apparatus; and simulating a process during which a machine passenger has information interaction with the interaction management apparatus.

Optionally, simulating an interaction process between an elevator system and the interaction management apparatus comprises one or more of the following steps: simulating a process during which the interaction management apparatus establishes a connection with an elevator system; and simulating a process during which the interaction management apparatus has information interaction with an elevator system.

Optionally, the fault type comprises one or more of: a network fault, a software fault, and a hardware fault.

Optionally, the software fault comprises: machine passenger software faults, interaction management apparatus software faults and elevator system software faults; and/or the hardware fault comprises: machine passenger hardware faults, interaction management apparatus hardware faults, and elevator system hardware faults.

Optionally, the method further comprises: executing all the steps in simulating the interaction process of the machine passenger and the elevator system via the interaction management apparatus in order, and judging all the fault types of interaction between the elevator system and the machine passenger based on the simulated interaction process.

Optionally, a portion of the steps of simulating an interaction process between a machine passenger and the elevator system via the interaction management apparatus is performed in a customized manner, and the corresponding interaction fault type of the elevator system with the machine passenger is judged based on the simulated interaction process.

Optionally, the method further comprises: determining a machine passenger to be simulated by entering an identity identifier of the machine passenger.

Optionally, the method further comprises: providing corresponding preset maintenance suggestions based on the fault type of interaction.

Optionally, the method further comprises: moving by simulating a moving route of a machine passenger, and respectively performing the fault diagnosis method in each moving section in the moving route.

Optionally, the moving section comprises: a first route section wherein the machine passenger moves to a first waiting area, a second route section wherein the machine passenger enters a target elevator from the first waiting area, a third route section wherein the machine passenger enters a second waiting area from the target elevator, and a fourth route section wherein the machine passenger exits the second waiting area.

To achieve at least one object of the present application, in accordance with another aspect of the present application, there is provided a readable storage medium having stored thereon an application, wherein the application is executed by a processor to implement the steps of the fault diagnosis method as described above.

To achieve at least one object of the present application, in accordance with yet another aspect of the present application, there is provided a n electronic device for a fault diagnosis method for the interaction between an elevator system and a machine passenger, comprising: a processor; a memory; and an application, wherein the application is stored in the memory and configured to be executed by the processor, the application configured for: performing the steps of the fault diagnosis method as described above.

Optionally, the electronic device comprises: a mobile communication terminal or a fixed communication terminal.

Optionally, the mobile communication terminal comprises: a cell phone, a tablet computer, or a laptop computer; and/or the fixed communication terminal comprises: a desktop computer.

Optionally, the electronic device is installed in a mobile apparatus, the mobile apparatus having a controlled autonomous movement function.

Optionally, the mobile apparatus comprises a machine passenger.

Optionally, the machine passenger comprises: delivery vehicles capable of controlled autonomous movement as well as robots capable of controlled autonomous movement.

To achieve at least one object of the present application, in accordance with yet another aspect of the present application, there is provided a fault diagnosis system for diagnosing a fault in an interaction between a machine passenger and an elevator system via an interaction management apparatus, wherein the fault diagnosis system comprises: an electronic device as described above, and an interaction management apparatus having a specific communication interface; wherein the specific communication interface opens communication permissions to the electronic device having acquired authorization such that diagnostic information is sent from the interaction management apparatus to the electronic device.

Optionally, the diagnostic information comprises: communication network signals, interaction management apparatus exception information.

Optionally, when the diagnostic information further comprises one or more of the following information when the interaction management apparatus is in communicatively connected with the elevator system: communication connection state between the interaction management apparatus and the elevator system, exception information of the elevator system and request information and response information sent by a machine passenger and the elevator system via the interaction management apparatus.

The fault diagnosis method, readable storage medium, electronic device and fault diagnosis system for interaction between an elevator system and a machine passenger according to the present application simulate the process of interaction between the machine passenger and the elevator system via the interaction management apparatus by acquiring diagnostic information and use it as a basis, thereby judging a fault type of interaction between the elevator system and the machine passenger. For maintenance personnel, this fault diagnosis method provides a relatively standardized maintenance procedure, the operation being convenient, and the requirement for professional literacy being reduced; for a customer, the maintenance process is less time consuming and accurate in diagnosis result, fault points in the interaction process of the two sets of products can be quickly and efficiently determined, so that targeted treatment measures are provided to quickly finish the product maintenance.

### BRIEF DESCRIPTION OF THE DRAWINGS

FIG. 1 is a schematic diagram of the steps of one embodiment of a fault diagnosis method for the interaction between an elevator system and a machine passenger.
FIG. 2 is a schematic diagram of one embodiment of an electronic device.
FIG. 3 is a schematic diagram of one embodiment of a fault diagnosis system and a peripheral interaction apparatus thereof.

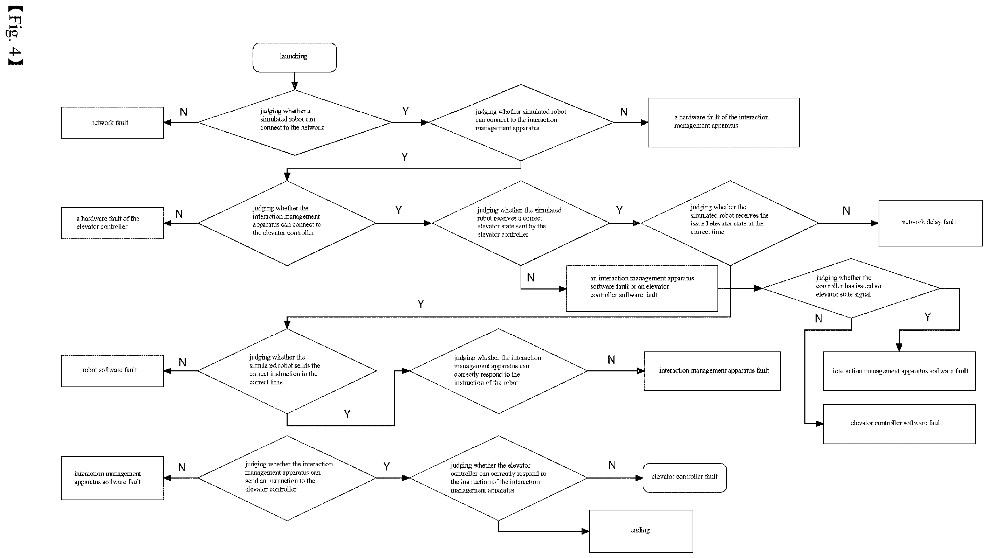

FIG. 4 is a schematic diagram of a flow for performing maintenance using a fault diagnosis method for interaction between an elevator system and a machine passenger.

### DETAILED DESCRIPTION OF THE EMBODIMENT(S) OF THE INVENTION

The present application will now be described more fully with reference to the accompanying drawings, in which exemplary embodiments of the application are shown. This application may, however, be implemented in many different forms and should not be construed as limited to the embodiments set forth herein. Rather, these embodiments are provided so that the disclosure becomes thorough and complete, and will fully convey the concept of the invention to those skilled in the art.

Although features of the present application are disclosed in connection with several embodiments/ only one of embodiments, as for any given or identifiable function that is desired and/or advantageous, this feature may be combined with other embodiments/ one or more other features of embodiments.

Some block diagrams shown in the figures are functional entities and do not necessarily have to correspond to physically or logically separate entities. These functional entities may be implemented in software or in one or more hardware modules or integrated circuits, or in different processing apparatus and/or microcontroller apparatus.

The term "machine passenger" as defined herein refers to various machines that potentially have attributes of taking an elevator, such machines should have at least controlled autonomous movement function so that it may enter or exit the elevator. For example, as a specific example of a machine passenger herein, it may be a delivery vehicle capable of controlled autonomous movement, such as a cargo transfer vehicle between floors, an intelligent infant car, and the like; and may also be various types of robots, such as robots for take-out, robots for meal delivering, robots for expressage, and the like. It will be understood that the specific type, structure, and/or use of a machine passenger may be varied, which is limited by the following embodiments of the present invention.

The term "interaction management apparatus" as defined herein refers to an apparatus that implements dispatching control on the elevator-taking related requirements of one or more machine passengers, which is used for processing and conveying instructions between machine passengers and elevator systems. Further, in this context, it is not primarily focused on the control dispatching of the elevator-taking related requirements involved in performing the machine passengers' own tasks, but is instead focused on transceiving of fault related diagnostic information during fault occurrence of an interaction process between a machine passenger and an elevator system.

The term "fault diagnosis method" as defined herein is a method of performing diagnostics on various potential faults such as network, hardware, or software in an interaction process between a machine passenger and an elevator system via an interaction management apparatus, and may provide targeted maintenance suggestions on the basis that a diagnostic is completed. The method should first include a data acquisition step, an analog step, and a diagnostic step, other possible steps may, of course, be included and the method should not be construed as being limited only to fault diagnosis.

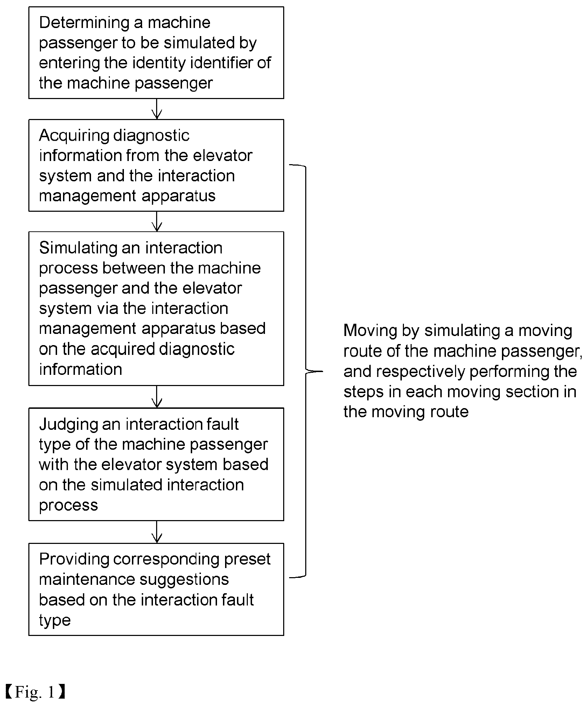

Return to the present application, only schematically shown in FIG. 1 is a schematic diagram of the steps of a fault diagnosis method for interaction between an elevator system and a machine passenger in accordance with the present application. Wherein, the elevator system applying the fault diagnosis method may generally include an elevator controller and its corresponding one or more elevators and associated connection thereof; further, there may also be interaction management apparatus as a device basis for processing and conveying the interaction information between the elevator system and the machine passenger. Referring to FIG. 1, the fault diagnosis method includes: acquiring diagnostic information from the elevator system and the interaction management apparatus; simulating an interaction process between the machine passenger and the elevator system via the interaction management apparatus based on the acquired diagnostic information; and judging the fault type of interaction between the machine passenger and the elevator system based on the simulated interaction process. For the maintenance personnel, the fault diagnosis method in the foregoing embodiment provides a relatively standardized maintenance procedure, the operation being convenient and the requirement for professional literacy being reduced; for a customer, the maintenance process is less time consuming and accurate in diagnosis result, fault points in the interaction process of the two sets of products can be quickly and efficiently determined, so that targeted treatment measures are provided to quickly finish the product maintenance.

Each step in the fault diagnosis method will be described from various angles as follows.

First, the step of acquiring diagnostic information from the elevator system and the interaction management apparatus is aimed at providing a basis with respect to data of simulation and judgement for subsequent simulation steps and judgement steps in the fault diagnosis method. As input information acquired from external systems (elevator systems and interaction management apparatus), such information should be directly associated with the interaction process between the two sets of systems in order to implement the diagnostic process. Thus, such information is defined as diagnostic information.

As an example of diagnostic information that facilitates implementation of a fault diagnosis method, it may include a communication network signal, hereby it may assist in judging whether a network fault exists during the interaction process between the machine passenger and an elevator system (e.g., an elevator controller in the system) via an interaction management apparatus; it may also include a communication connection state between a simulated machine passenger and the elevator controller via the interaction management apparatus, hereby it may assist in judging whether a communication fault exists in the interaction process between the machine passenger and the elevator controller via the interaction management apparatus. For example, when the interaction management apparatus is unable to connect to the network, then the fault may be a presence of a network fault.

As another type of examples of diagnostic information, it may also include exception information of the elevator system (e.g., exception information of the elevator controller) and exception information of the interaction management apparatus to assist in judging whether there is a software fault, hardware fault, or network fault on themselves. For example, when the interaction management apparatus is unable to communicate with the elevator controller of the elevator system, it may belong to either a network fault or a software fault. As another example, when the elevator controller is able to receive commands from the interaction management apparatus, but cannot execute correctly, such as receiving two call instructions and the like within a very short time (such as 0.2 seconds), it may belong to hardware faults or limitations of the elevator controller.

As yet another type of examples of diagnostic information, it may also include request information and response information sent by the simulated machine passenger and the elevator system via the interaction management apparatus, such as request information sent to the elevator system by the machine passenger via the interaction management apparatus, and response information sent to the machine passenger by the elevator system via the interaction management apparatus to assist in judging whether there is a software fault, a hardware fault, or a network fault on themselves. For example, the request information sent to the elevator system by the machine passenger via the interaction management apparatus may be a call instruction issued when there is a need of taking an elevator, and such a call instruction may include information such as an elevator number, a destination floor, and a current floor; the request information may also be an instruction for holding the elevator door open issued when there is a need of exiting an elevator, and such instructions may include information such as an elevator number, a current floor, the elevator door opening time, and the like. By judging whether the information is correctly sent, is correctly received, and is correctly executed, it may correspondingly assist in judging whether a software fault, a hardware fault or a network fault exists on the machine passenger, the interaction management apparatus and the elevator controller themselves.

Second, after completing the acquisition of the diagnostic information based on the foregoing steps, simulating the interaction process of the machine passenger with the elevator system (e.g., its elevator controller) via the interaction management apparatus may be performed, i.e., the device executing this step will be virtualized into a role of one machine passenger so as to complete the entire interaction process in order to find out the fault point therein. And if the device executing the step can successfully simulate the whole interaction process completely, it means that the fault point lies in the simulated machine passenger itself. Thus, with the simulation process in conjunction with the acquired diagnostic information, the fault point of the interaction may typically be found out.

Wherein, it should be understood that, in order to successfully virtualize the device into a specific machine passenger, there should also be an authentication step to the identity of the machine passenger. At this point, the machine passenger to be simulated by the device may be determined by entering the identity identifier of the machine passenger.

As one of the simulation methods for such an interaction process, it may include one or more of the following steps: simulating a network interaction process; simulating a hardware interaction process; and simulating a software interaction process to assist in confirming which one of the network, hardware, or software is the fault point. In general, as the most convenient operation, all of the foregoing steps may be performed in order or out of order, thereby enabling simulation of the complete process to find out the fault point; furthermore, as the experience accumulation and proficiency of maintenance personnel increase, they are possible to have some judgement on the fault type after they arrive at the scene and get to know the situation, to further save time, they may directly choose to simulate the interaction process they think is most likely to fail, thereby performing a targeted simulation.

Furthermore, for the foregoing simulation process, simulating a network interaction process may specifically include: simulating a process during which a machine passenger establishes a connection with the network, and if a connection can be established, it is likely that the simulated machine passenger itself fails, and if a connection cannot be established, it is likely that there is a fault with the network. In addition, simulating a hardware interaction process may include: simulating a process during which a machine passenger establishes a connection with an interaction management apparatus; and simulating a process during which an interaction management apparatus establishes a connection with the elevator controller; and thereby it is derived which of the three of machine passenger, the interaction management apparatus, and the elevator controller may have a hardware fault. Moreover, simulating a software interaction process includes: simulating a process during which the machine passenger has information interaction with the interaction management apparatus; and simulating a process during which the interaction management apparatus has information interaction with the elevator controller; and thereby it is derived which of the three of the machine passenger, the interaction management apparatus, and the elevator controller may have a software fault.

As the second simulation method of the interaction process between the machine passenger and the elevator controller via the interaction management apparatus, it may also include one or more of the following steps: simulating an interaction process between the machine passenger and the interaction management apparatus; simulating the interaction process between the elevator controller and the interaction management apparatus to assist in confirming which one of the machine passenger, the interaction management apparatus, or the elevator controller is the fault point. In general, as the most convenient operation, all of the foregoing steps can be performed in order or out of order, thereby enabling simulation of the full process to find out the fault point; furthermore, as the experience accumulation and proficiency of maintenance personnel increase, they are possible to have some judgement on the fault type after they arrive at the scene and get to know the situation, to further save time, they may directly choose to simulate the interaction process they think is most likely to fail, thereby performing a targeted simulation.

Further, for the foregoing simulation process, simulating the interaction process between the machine passenger and the interaction management apparatus may include one or more of the following steps: i.e. simulating a process during which the machine passenger establishes a connection with the network; simulating a process during which the machine passenger establishes a connection with the interaction management apparatus; and simulating a process during which the machine passenger has information interaction with the interaction management apparatus, thereby individually or fully assisting in confirming whether it is a network fault, a hardware fault, or a software fault that occurs between the machine passenger and the interaction management apparatus.

Furthermore, simulating the interaction process between the elevator controller and the interaction management apparatus may also include one or more of the following steps: i.e. simulating a process during which the interaction management apparatus establishes a connection with the elevator controller; and simulating a process during which the interaction management apparatus has information interaction with the elevator controller, thereby individually or fully assisting in confirming whether it is a network fault, a hardware fault, or a software fault that occurs between the elevator controller and the interaction management apparatus.

Finally, the acquired diagnostic information and the simulated interaction process may be combined to judge the fault type of interaction between the elevator system and the machine passenger. Such fault types may include one or more of the following: a network fault, a software fault, and a hardware fault. And more specifically, wherein the software fault includes: a machine passenger software fault, an interaction management apparatus software fault and an elevator controller software faults; and the hardware fault includes: a machine passenger hardware fault, an interaction management apparatus hardware fault, and an elevator controller hardware fault, so as to provide fault basis for subsequent targeted maintenance measures.

On the basis of the foregoing embodiments, modifications may also be made to various aspects of the fault diagnosis method to achieve additional or better technical effects as will be illustratively described below.

For example, with respect to acquisition of diagnostic information, since a machine passenger that is simulated by the device typically only communicate directly with the interaction management apparatus, and various requests and responses it issued towards the elevator are all received and sent from the elevator controller via the interaction management apparatus. Thus, the fault diagnosis method may be configured to acquire diagnostic information directly from the interaction management apparatus; and to indirectly acquire diagnostic information stored by the elevator controller from the interaction management apparatus via communication of the interaction management apparatus with the elevator controller. Alternatively, in the case that the software and hardware configuration allow, the fault diagnosis method may also be configured to acquire diagnostic information directly from the elevator system.

Further, as already briefly mentioned above, for simulating the interaction process between devices, its specific operation may be to perform all of the steps in simulating the interaction process between the machine passenger and the elevator controller via the interaction management apparatus in order, and to judge all the fault types of interaction of the elevator system with the machine passenger based on the simulated interaction process. Such an operation mode reduces the requirement for maintenance personnel, tests completely and accurately.

Alternatively, the specific operation may also be to customize partial steps in performing the simulation of interaction process between the machine passenger interaction and the elevator controller via the interaction management apparatus, and to judge a corresponding fault type of interaction between the elevator system and the machine passenger based on the simulated interaction process. Such an operating mode facilitates experienced maintenance personnel to selectively make a simulation and find out problems based on their experience and conjecture, time can be further saved.

In addition, as a further refinement of this fault diagnosis method, after a fault type has been checked, corresponding preset maintenance suggestions (e.g., repairing the network, replacing the communication module, debugging the software, and the like) may also be provided based on the fault type of interaction.

Furthermore, as the machine passenger is typically on a route planned by the map management module or in a state of staying within the elevator car during normal interaction process between the machine passenger and the elevator system. Therefore, to more fully simulate the running process of a machine passenger to assist in fault diagnosis, the method may further include: moving by simulating a moving route of the machine passenger, and respectively performing the fault diagnosis method in the foregoing embodiment in each moving section in the moving route. By way of example, the foregoing moving section may include: a first route section wherein the machine passenger moves to a first waiting area, a second route section wherein the machine passenger enters a target elevator from the first waiting area, a third route section wherein the machine passenger enters a second waiting area from the target elevator, and a fourth route section wherein the machine passenger exits the second waiting area. By performing the foregoing fault diagnosis method in different route sections, the actual situation when the machine passenger and the elevator system encounter an interaction fault can be simulated more truly in order to accurately find out the fault point.

It should be understood that while embodiments of this fault diagnosis method are described in a certain order in connection with the accompanying figures, and each step in the accompanying flowcharts are shown in sequence in the order of arrows, these steps are not necessarily performed sequentially in the order indicated by the arrows. The performing of these steps is not strictly limited in order unless explicitly stated herein, these steps may be performed in other orders. Moreover, at least a portion of the steps in the flowcharts of the figures may include multiple sub-steps or multiple stages that do not necessarily have to be completed at the same time, but may be performed at different times, the performing order thereof is not necessarily performing sequentially, but may be performing in turn or alternatively with at least a portion of the other steps or sub-steps of the other steps or stages.

Further, although not shown, there is also provided a readable storage medium having stored thereon an application, wherein the application is executed by the processor to implement the steps of the fault diagnosis method as previously described, and thereby achieving corresponding technical effect, and thus the is not repeated herein.

Additionally, as a carrier capable of storing and executing the foregoing methods, an exemplary description is provided herein for a number of devices available for production, sale, or use.

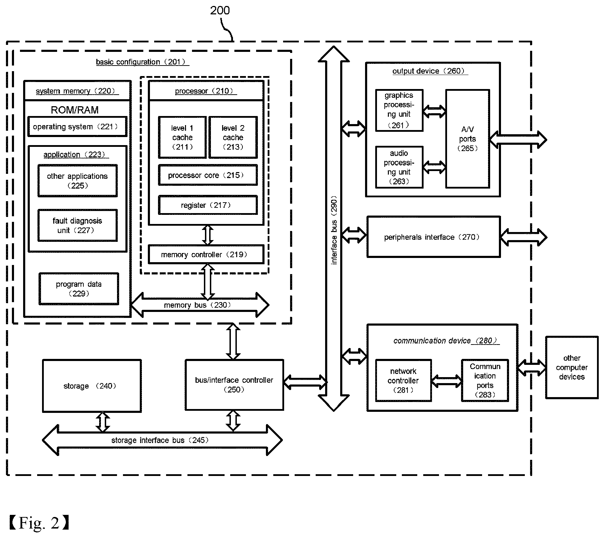

As shown in FIG. 2, the fault diagnosis method may be implemented by an electronic device 200 of one embodiment of the present invention, the electronic device may be a mobile communication terminal or a fixed communication terminal, and more specifically, a mobile communication terminal may include a cell phone, a tablet computer, or a laptop computer; and the fixed communication terminal may include a desktop computer. The various computers referred to herein may be a general purpose computer, a special purpose computer, or a machine having computing and processing functionality based on a prejudged program, and may even be implemented by cloud computing. Such electronic devices all have a hardware and software basis for the diagnosis method for interaction between an elevator system and a machine passenger.

Referring to the specific exemplary frame structure of the electronic device 200 of the embodiment shown in FIG. 2, in a basic configuration 201, the electronic device 200 typically includes a system memory 220 and one or more processors 210. The memory bus 230 may be used for communication between the processor 210 and the system memory 220.

Depending on the desired configuration, the processor 210 may be any type of processing, including but not limited to: a microprocessor (µP), a microcontroller (µC), a digital signal processor (DSP), or any combination thereof. The processor 210 may include one or more levels of cache such as a level 1 cache 211 and a level 2 cache 213, and may also include a processor core 215 and a register 217. The example processor core 215 may include an arithmetic logic unit (ALU), a floating point unit (FPU), a digital signal processing core (DSP Core), or any combination thereof. The example memory controller 219 may be used with the processor 210, or in some embodiments, the memory controller 219 may be a built-in part of the processor 210.

Depending on the desired configuration, the system memory 220 may be any type of memory, including but not limited to: volatile memory (e.g., RAM), non-volatile memory (e.g., ROM, flash memory, etc.), and may also be an EEPROM, CD-ROM, or other optical disc storage, optical disk storage (including compact disks, laser disks, optical disks, digital versatile disks, blue-ray disks, and the like), magnetic disc storage media or other magnetic storage devices, or any other medium capable of carrying or storing desired program code in the form of instructions or data structures and capable of being accessed by electronic devices, or any combination thereof. The system memory 220 may include an operating system 221, one or more applications 223, and program data 229. In some implementations, application 223 may be arranged to operate on an operating system utilizing program data 229.

The electronic device 200 may also include an interface bus 290 that facilitates communication from various interface devices (e.g., output device 260, peripherals interface 270, and communication device 280) to basic configuration 102 via bus/interface controller 250. Example output device 260 includes a graphics processing unit 261 and an audio processing unit 263. They may be configured to facilitate communication with various external devices such as a display or speakers via one or more A/V ports 265. Example peripherals interface 270 may include a serial interface controller and a parallel interface controller, which may be configured to facilitate communication via one or more I/O ports and external devices such as input devices (e.g., keyboards, mice, pens, voice input devices, touch input devices), or other peripherals (e.g., printers, scanners, and the like). The example communication device 280 may include a network controller 281, which may be arranged to be suitable for communicating with one or more other electronic devices (e.g., an interaction management apparatus or an elevator controller of an elevator system) via one or more communication ports 283.

In addition, it may also have a communication module for wireless communication, which may employ a variety of mature technologies, such as 3G/4G/5G network, Bluetooth module, LoRa module, NB-IoT module, or eMTC module to thereby adapt to short-range wireless communication, long-range wireless communication, or to adapt to different regulations of various countries and regions, respectively.

Continuing with FIG. 2, in one embodiment, a fault diagnosis unit 227 is also included in the application 223 of the electronic device 200. The fault diagnosis unit 227 may be installed as a stand-alone software in the electronic device 200 or only embodied as a piece of code; it will be understood that the presence form of the fault diagnosis unit 227 in the electronic device 200 is not limiting. The fault diagnosis unit 227 may be used to implement: obtaining diagnostic information from the elevator system and the interaction management apparatus; simulating an interaction process between the machine passenger and the elevator system via the interaction management apparatus based on the acquired diagnostic information; and judging the fault type of interaction between the machine passenger and the elevator system based on the simulated interaction process. Therefore, the fault diagnosis unit 227 helps to provide a relatively standardized maintenance flow, the operation of which is convenient and reduces the requirement for professional literacy of maintenance personnel; further, the fault diagnosis unit 227 helps to reduce the time consumption of maintenance process and to improve the accuracy of diagnosis in order to quickly complete device maintenance. The specific functions and implementation of the fault diagnosis unit 227 may be understood with reference to a fault diagnosis method described in conjunction with the embodiment shown in FIG. 1.

Further, for an electronic device implementing fault diagnosis in the present application, when applied to conventional communication terminals of various computer device, mobile phones and the like, the electronic device may be carried to move by the maintenance personnel to simulate the moving route of the machine passenger, and the fault diagnosis method is respectively executed through the electronic device in each moving section in the moving route. In addition to this, the electronic device may also be installed in a mobile apparatus with controlled autonomous movement functions as a set of accessories. At this point, the set of mobile apparatus may be directly controlled to automatically move on the moving route of the machine passenger to complete the whole simulation and diagnostic process, thereby being more efficient and convenient. For example, as one example, the foregoing electronic devices may be configured in each machine passenger. At this point, if one or more machine passenger fails to interact with the elevator system, the simulation process may be completed by entering the identity identifier of the machine passenger with the potential fault into a normal machine passenger to virtualize the normal one into one with potential fault so that the fault diagnosis is achieved.

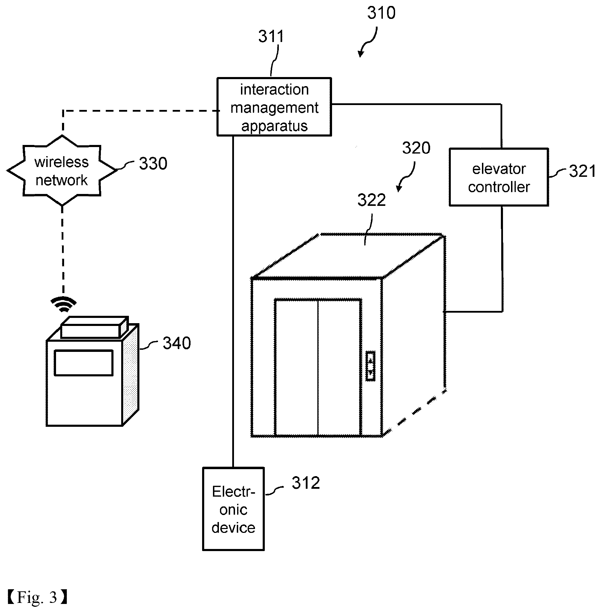

Further, with reference to FIG. 3, an embodiment of a fault diagnosis system is also provided herein. The fault diagnosis system is used for diagnosing faults in the interaction between the machine passenger and the elevator system via the interaction management apparatus. Specifically, the fault diagnosis system 310 includes an interaction management apparatus 311 and an electronic device 312. Wherein the electronic device 312 may employ the electronic devices in any of the embodiments described above in connection with FIG. 2, or a combination thereof; and the interaction management apparatus 311, in addition to conventional communication interfaces for conducting interfacing, dispatching, receiving and forwarding instructions with the machine passenger 340 over the wireless network 330, also includes a specific communication interface for transceiving diagnostic information. After the electronic device 312 obtains authorization through information authentication, the specific communication interface may open communication permissions to the electronic device 312 having acquired authorization so that the diagnostic information is sent from the interaction management apparatus 311 to the electronic device 312. Because machine passengers 340 in conventional applications typically do not have display and analysis functionality for faults, providing a specific communication interface may not facilitate diagnosis and maintenance, nor do it bring additional assistance to their regular operation, thus there is no need to develop such a specific communication interface. In the present application, for various diagnostic devices including machine passengers with updated relevant maintenance software and hardware, the development of that specific communication interface enables the various diagnostic devices to acquire diagnostic information within the interaction management apparatus in the event of authorization to assist in subsequent simulation and diagnostic procedures and to effectively ensure the security of the information transmission.

For example, the diagnostic information that the interaction management apparatus 311 may normally communicate includes: communication network signals, exception information of the interaction management apparatus. On this basis, when the machine passenger 340 is communicatively connected to the elevator system 320 with the elevator controller 321 and the elevator car 322 via the interaction management apparatus 311, the diagnostic information that may be communicated by the interaction management apparatus 311 will also include one or more of the following: the communication connection state of the machine passenger 340 with the elevator system 320, the exception information of the elevator controller 321, the request information and response information sent by the machine passenger 340 and the elevator system 320 via the interaction management apparatus 311. As for applications and specific examples of various types of diagnostic information, they have been explained and illustrated in the foregoing embodiments of the fault diagnosis method and are not repeated herein.

To more fully understand the concept of the present application, a set of diagnostic process of the foregoing method is described herein in connection with the fault diagnosis method in any of the preceding embodiments or combinations thereof, with a cell phone as an executing apparatus and a robot as a simulated machine passenger.

When an app is launched at the cell phone side, the machine passenger to be simulated will be determined by entering the identity identifier of the machine passenger. After that, the app will perform self-check at the cell phone side, after confirming that the communication function of the cell phone side is normal, the execution of simulation of collection and interaction process of the diagnostic information is started. And the following judgement may be performed one by one or in a customized manner during or after simulating the interaction process:
First, judging whether a simulated robot can connect to the network: if it fails to connect to the network, it means a network fault exists, and if the network has been connected, proceeding to the next step. Judging whether simulated robot can connect to the interaction management apparatus: if it fails to connect to the interaction management apparatus, it means a hardware fault may exist in the interaction management apparatus, and if the interaction management apparatus has been connected, proceeding to the next step. Judging whether the interaction management apparatus can connect to the elevator controller: if it fails to connect to the elevator controller, it means a hardware fault may exist in the elevator controller, and if the elevator controller has been connected, proceeding to the next step. Judging whether the simulated robot receives a correct elevator state sent by the elevator controller: if not, it means that there may be an interaction management apparatus software fault or an elevator controller software fault, at which point the sub-steps may be subsequently performed to make a further explicit indication of the fault: for example, it may be judged whether the controller has issued an elevator state signal, if the controller has issued the signal, it means that there may be an interaction management apparatus software fault, and if the controller has not yet issued the signal, it means that there may be a controller software fault; returning to the upstream judgement step of the foregoing sub-steps, if the correct elevator state sent by the elevator controller may be received normally, proceeding to the next step. Judging whether the simulated robot receives the issued elevator state at the correct time, if it fails to receive within the correct time, it means a network delay fault may exist; if it may receive within the correct time, proceeding to the next step is continued. Judging whether the simulated robot sends the correct instruction and parameters in the correct time: if the robot fails to send information correctly or the information sent is incorrect, it means that a robot software fault may exist; if it may receive normally, proceeding to the next step. Judging whether the interaction management apparatus can correctly respond to the instruction of the robot: if the instruction is not responded correctly, it means a hardware fault or a software fault of the interaction management apparatus may exist; if it is normally responded, proceeding to the next step. Judging whether the interaction management apparatus can send an instruction to the elevator controller, if not, it means that a software fault of the interaction management apparatus may exist, and if so, proceeding to the next step. Judging whether the elevator controller can correctly respond to the instruction of the interaction management apparatus: if the controller fails to respond correctly, it means that a hardware fault or a software fault may exist in the elevator controller; if the controller may normally respond, proceeding to the next step or complete the diagnostic process. After the diagnostic process is completed, in case that all the acquired diagnosis results are normal, it means the whole interaction process may be successfully completed by using the cell phone to simulate the robot, as such, the faults occurring in the previous interaction process may be caused by the simulated robot itself, so the step may return to service the robot itself.

The above examples mainly illustrate a fault diagnosis method, a readable storage medium, an electronic device and a fault diagnosis system for interaction between an elevator system and a machine passenger of the present application. While only some of the embodiments of the present application have been described, it will be understood by those of ordinary skill in the art that the present application may be implemented in many other forms without departing from the scope of the appended claims 1-15. Accordingly, the illustrated examples and implementations are to be considered as illustrative and not restrictive, and various modifications and substitutions may be encompassed by the present application without departing from the scope of the appended claims 1-15.

## Claims

1. A fault diagnosis method for interaction between an elevator system (320) and a machine passenger (340) for diagnosing a fault in the interaction between the machine passenger (340) and the elevator system (320) via an interaction management apparatus (311), comprising:
acquiring diagnostic information from the elevator system (320) and the interaction management apparatus (311);
simulating an interaction process between the machine passenger (340) and the elevator system (320) via the interaction management apparatus (311) based on the acquired diagnostic information; and
judging a fault type of interaction between the machine passenger (340) and the elevator system (320) based on the simulated interaction process.

2. The fault diagnosis method of claim 1, wherein the diagnostic information comprises one or more of the following information: a communication network signal, a communication connection state of a simulated machine passenger with the elevator system (320), exception information of the elevator system (320), exception information of the interaction management apparatus (311), and request information and response information sent by the simulated machine passenger and the elevator system (320) via the interaction management apparatus (311); and/or
wherein the diagnostic information is acquired directly from the interaction management apparatus (311), and the diagnostic information is acquired from the elevator system (320); or the diagnostic information for the elevator system is indirectly acquired from the interaction management apparatus (311) via communication of the interaction management apparatus (311) with the elevator system (320).

3. The fault diagnosis method of claim 1 or 2, wherein the interaction process of the simulated machine passenger with the elevator system (320) via the interaction management apparatus (311) comprises one or more of the following steps:
simulating a network interaction process;
simulating a hardware interaction process; and
simulating a software interaction process.

4. The fault diagnosis method of claim 3, wherein:
simulating the network interaction process comprises:
simulating a process during which a machine passenger (340) establishes a connection with a network; and/or
simulating the hardware interaction process comprises:
simulating a process during which the machine passenger (340) establishes a connection with the interaction management apparatus (311); and
simulating a process during which the interaction management apparatus (311) establishes a connection with the elevator system (320); and/or
simulating the software interaction process comprises:
simulating a process during which the machine passenger (340) has information interaction with the interaction management apparatus (311); and
simulating a process during which the interaction management apparatus (311) has information interaction with the elevator system (320).

5. The fault diagnosis method of any preceding claim, wherein simulating an interaction process of the machine passenger (340) with the elevator system (320) via the interaction management apparatus (311) comprises one or more of the following steps:
simulating an interaction process between a machine passenger (340) and the interaction management apparatus (311);
simulating an interaction process between the elevator system (320) and the interaction management apparatus (311).

6. The fault diagnosis method of claim 5, wherein simulating the interaction process between the machine passenger (340) and the interaction management apparatus (311) comprises one or more of the following steps:
simulating a process during a machine passenger (340) establishes a connection with a network;
simulating a process during which a machine passenger (340) establishes a connection with the interaction management apparatus (311); and
simulating a process during which a machine passenger (340) has information interaction with the interaction management apparatus (311).

7. The fault diagnosis method of claim 5 or 6, wherein simulating an interaction process between an elevator system (320) and the interaction management apparatus (311) comprises one or more of the following steps:
simulating a process during which the interaction management apparatus (311) establishes a connection with an elevator system (320); and
simulating a process during which the interaction management apparatus (311) has information interaction with an elevator system (320).

8. The fault diagnosis method of any preceding claim, wherein the fault type comprises one or more of: a network fault, a software fault, and a hardware fault;
optionally wherein:
(i) the software fault comprises: machine passenger software faults, interaction management apparatus software faults and elevator system software faults; and/or
(ii) the hardware fault comprises: machine passenger hardware faults, interaction management apparatus hardware faults, and elevator system hardware faults.

9. The fault diagnosis method of any preceding claim, further comprising: executing all the steps in simulating the interaction process of the machine passenger (340) and the elevator system (320) via the interaction management apparatus (311) in order, and judging all the fault types of interaction between the elevator system (320) and the machine passenger (340) based on the simulated interaction process.

10. The fault diagnosis method of any preceding claim, wherein a portion of the steps of simulating an interaction process between a machine passenger (340) and the elevator system (320) via the interaction management apparatus (311) is performed in a customized manner, and the corresponding interaction fault type of the elevator system (320) with the machine passenger (340) is judged based on the simulated interaction process.

11. The fault diagnosis method of any preceding claim, further comprising:
determining a machine passenger (340) to be simulated by entering an identity identifier of the machine passenger (340); and/or
providing corresponding preset maintenance suggestions based on the fault type of interaction; and/or
moving by simulating a moving route of a machine passenger (340), and respectively performing the fault diagnosis method in each moving section in the moving route, optionally wherein the moving section comprises: a first route section wherein the machine passenger (340) moves to a first waiting area, a second route section wherein the machine passenger (340) enters a target elevator from the first waiting area, a third route section wherein the machine passenger (340) enters a second waiting area from the target elevator, and a fourth route section wherein the machine passenger (340) exits the second waiting area.

12. A readable storage medium having stored thereon an application, wherein the application is executed by a processor to implement the steps of the fault diagnosis method of any of claims 1 to 11.

13. An electronic device for a fault diagnosis method for the interaction between an elevator system (320) and a machine passenger (340), comprising:
a processor;
a memory; and
an application, wherein the application is stored in the memory and configured to be executed by the processor, the application configured for: performing the steps of the fault diagnosis method of any of claims 1 to 11.

14. The electronic device of claim 13, wherein the electronic device comprises: a mobile communication terminal or a fixed communication terminal, optionally wherein:
(i) the mobile communication terminal comprises: a cell phone, a tablet computer, or a laptop computer; and/or
(ii) the fixed communication terminal comprises: a desktop computer; and/or
(iii) the electronic device is installed in a mobile apparatus, the mobile apparatus having a controlled autonomous movement function, optionally wherein the mobile apparatus comprises a machine passenger (340), further optionally wherein the machine passenger (340) comprises: delivery vehicles capable of controlled autonomous movement as well as robots capable of controlled autonomous movement.

15. A fault diagnosis system for diagnosing a fault in an interaction between a machine passenger (340) and an elevator system (320) via an interaction management apparatus (311), comprising: an electronic device of claim 13 or 14, and an interaction management apparatus (311) having a specific communication interface; wherein the specific communication interface opens communication permissions to the electronic device having acquired authorization such that diagnostic information is sent from the interaction management apparatus (311) to the electronic device;
optionally wherein the diagnostic information comprises: communication network signals, interaction management apparatus exception information; and/or
optionally wherein the diagnostic information further comprises one or more of the following information when the interaction management apparatus (311) is in communicatively connected with the elevator system (320): communication connection state between the interaction management apparatus (311) and the elevator system (320), exception information of the elevator system (320) and request information and response information sent by a machine passenger (340) and the elevator system (320) via the interaction management apparatus (311).

## Patentansprüche

1. Fehlerdiagnoseverfahren zur Interaktion zwischen einem Aufzugssystem (320) und einem Maschinenfahrgast (340) zum Diagnostizieren eines Fehlers in der Interaktion zwischen dem Maschinenfahrgast (340) und dem Aufzugssystem (320) über eine Interaktionsmanagementeinrichtung (311), umfassend:
Erfassen von Diagnoseinformationen von dem Aufzugssystem (320) und der Interaktionsmanagementeinrichtung (311);
Simulieren eines Interaktionsprozesses zwischen dem Maschinenfahrgast (340) und dem Aufzugssystem (320) über die Interaktionsmanagementeinrichtung (311) basierend auf den erfassten Diagnoseinformationen; und
Beurteilen einer fehlerhaften Art der Interaktion zwischen dem Maschinenfahrgast (340) und dem Aufzugssystem (320) basierend auf dem simulierten Interaktionsprozess.

2. Fehlerdiagnoseverfahren nach Anspruch 1, wobei die Diagnoseinformationen eine oder mehrere der folgenden Informationen umfassen: ein Kommunikationsnetzwerksignal, einen Kommunikationsverbindungszustand eines simulierten Maschinenfahrgasts mit dem Aufzugssystem (320), Ausnahmeinformationen des Aufzugssystems (320), Ausnahmeinformationen der Interaktionsmanagementeinrichtung (311) und Anfrageinformationen und Antwortinformationen, die von dem simulierten Maschinenfahrgast und dem Aufzugssystem (320) über die Interaktionsmanagementeinrichtung (311) gesendet werden; und/oder
wobei die Diagnoseinformationen direkt von der Interaktionsmanagementeinrichtung (311) und die Diagnoseinformationen von dem Aufzugssystem (320) erfasst werden; oder die Diagnoseinformationen für das Aufzugssystem indirekt von der Interaktionsmanagementeinrichtung (311) über eine Kommunikation der Interaktionsmanagementeinrichtung (311) mit dem Aufzugssystem (320) erfasst werden.

3. Fehlerdiagnoseverfahren nach Anspruch 1 oder 2, wobei der Interaktionsprozess des simulierten Maschinenfahrgasts mit dem Aufzugssystem (320) über die Interaktionsmanagementeinrichtung (311) einen oder mehrere der folgenden Schritte umfasst:
Simulieren eines Netzwerkinteraktionsprozesses;
Simulieren eines Hardware-Interaktionsprozesses; und
Simulieren eines Software-Interaktionsprozesses.

4. Fehlerdiagnoseverfahren nach Anspruch 3, wobei:
das Simulieren des Netzwerkinteraktionsprozesses Folgendes umfasst:
Simulieren eines Prozesses, bei dem ein Maschinenfahrgast (340) eine Verbindung mit einem Netzwerk herstellt; und/oder
wobei das Simulieren des Hardware-Interaktionsprozesses Folgendes umfasst:
Simulieren eines Prozesses, bei dem der Maschinenfahrgast (340) eine Verbindung mit der Interaktionsmanagementeinrichtung (311) herstellt; und
Simulieren eines Prozesses, bei dem die Interaktionsmanagementeinrichtung (311) eine Verbindung mit dem Aufzugssystem (320) herstellt; und/oder
wobei das Simulieren des Software-Interaktionsprozesses Folgendes umfasst:
Simulieren eines Prozesses, bei dem der Maschinenfahrgast (340) eine Informationsinteraktion mit der Interaktionsmanagementeinrichtung (311) hat; und
Simulieren eines Prozesses, bei dem die Interaktionsmanagementeinrichtung (311) eine Informationsinteraktion mit dem Aufzugssystem (320) hat.

5. Fehlerdiagnoseverfahren nach einem der vorhergehenden Ansprüche, wobei das Simulieren eines Interaktionsprozesses des Maschinenfahrgasts (340) mit dem Aufzugssystem (320) über die Interaktionsmanagementeinrichtung (311) einen oder mehrere der folgenden Schritte umfasst:
Simulieren eines Interaktionsprozesses zwischen einem Maschinenfahrgast (340) und einer Interaktionsmanagementeinrichtung (311);
Simulieren eines Interaktionsprozesses zwischen dem Aufzugssystem (320) und der Interaktionsmanagementeinrichtung (311).

6. Fehlerdiagnoseverfahren nach Anspruch 5, wobei das Simulieren des Interaktionsprozesses zwischen dem Maschinenfahrgast (340) und der Interaktionsmanagementeinrichtung (311) einen oder mehrere der folgenden Schritte umfasst:
Simulieren eines Prozesses, bei dem ein Maschinenfahrgast (340) eine Verbindung mit einem Netzwerk herstellt;
Simulieren eines Prozesses, bei dem ein Maschinenfahrgast (340) eine Verbindung mit der Interaktionsmanagementeinrichtung (311) herstellt; und
Simulieren eines Prozesses, bei dem ein Maschinenfahrgast (340) eine Informationsinteraktion mit der Interaktionsmanagementeinrichtung (311) hat.

7. Fehlerdiagnoseverfahren nach Anspruch 5 oder 6, wobei das Simulieren eines Interaktionsprozesses zwischen einem Aufzugssystem (320) und der Interaktionsmanagementeinrichtung (311) einen oder mehrere der folgenden Schritte umfasst:
Simulieren eines Prozesses, bei dem die Interaktionsmanagementeinrichtung (311) eine Verbindung mit einem Aufzugssystem (320) herstellt; und
Simulieren eines Prozesses, bei dem die Interaktionsmanagementeinrichtung (311) eine Informationsinteraktion mit einem Aufzugssystem (320) hat.

8. Fehlerdiagnoseverfahren nach einem der vorhergehenden Ansprüche, wobei der Fehlertyp einen oder mehrere von Folgendem umfasst: einen Netzwerkfehler, einen Softwarefehler und einen Hardwarefehler;
wobei optional:
(i) der Softwarefehler Folgendes umfasst: Softwarefehler bei der Fahrgastmaschine, Softwarefehler bei der Interaktionsverwaltungsvorrichtung und Softwarefehler bei dem Aufzugssystem; und/oder
(ii) der Hardwarefehler Folgendes umfasst: Hardwarefehler bei der Fahrgastmaschine, Hardwarefehler bei der Interaktionsverwaltungsvorrichtung und Hardwarefehler bei der Aufzugsanlage.

9. Fehlerdiagnoseverfahren nach einem der vorhergehenden Ansprüche, ferner umfassend: Ausführen aller Schritte beim Simulieren des Interaktionsprozesses des Maschinenfahrgasts (340) und des Aufzugssystems (320) über die Interaktionsverwaltungsvorrichtung (311) in der richtigen Reihenfolge und Beurteilen aller Fehlertypen der Interaktion zwischen dem Aufzugssystem (320) und dem Maschinenfahrgast (340) basierend auf dem simulierten Interaktionsprozess.

10. Fehlerdiagnoseverfahren nach einem der vorhergehenden Ansprüche, wobei ein Teil der Schritte des Simulierens eines Interaktionsprozesses zwischen einem Maschinenfahrgast (340) und dem Aufzugssystem (320) über die Interaktionsverwaltungsvorrichtung (311) in einer individuellen Weise durchgeführt wird und der entsprechende Interaktionsfehlertyp des Aufzugssystems (320) mit dem Maschinefahrgast (340) basierend auf dem simulierten Interaktionsprozess beurteilt wird.

11. Fehlerdiagnoseverfahren nach einem der vorhergehenden Ansprüche, ferner umfassend:
Bestimmen eines zu simulierenden Maschinenfahrgasts (340) durch Eingeben einer Identitätskennung des Maschinenfahrgasts (340); und/oder
Bereitstellen entsprechender voreingestellter Wartungsvorschläge basierend auf der Fehlertypinteraktion; und/oder
Bewegen durch Simulieren einer Bewegungsroute eines Maschinenfahrgasts (340) und jeweiliges Durchführen des Fehlerdiagnoseverfahrens in jedem Bewegungsabschnitt der Bewegungsroute, wobei der Bewegungsabschnitt optional Folgendes umfasst: einen ersten Routenabschnitt, in dem sich der Maschinenfahrgast (340) zu einem ersten Wartebereich bewegt, einen zweiten Routenabschnitt, in dem der Maschinenfahrgast (340) aus dem ersten Wartebereich in einen Zielaufzug tritt, einen dritten Routenabschnitt, in dem der Maschinenfahrgast (340) aus dem Zielaufzug in einen zweiten Wartebereich tritt, und einen vierten Routenabschnitt, in dem der Maschinenfahrgast (340) den zweiten Wartebereich verlässt.

12. Lesbares Speichermedium, auf dem eine Anwendung gespeichert ist, wobei die Anwendung durch einen Prozessor ausgeführt wird, um die Schritte des Fehlerdiagnoseverfahrens nach einem der Ansprüche 1 bis 11 umzusetzen.

13. Elektronische Vorrichtung für ein Fehlerdiagnoseverfahren zur Interaktion zwischen einem Aufzugssystem (320) und einem Maschinenfahrgast (340), umfassend:
einen Prozessor;
einen Speicher; und
eine Anwendung, wobei die Anwendung in dem Speicher gespeichert und zur Ausführung durch den Prozessor konfiguriert ist, wobei die Anwendung zu Folgendem konfiguriert ist: Durchführen der Schritte des Fehlerdiagnoseverfahrens nach einem der Ansprüche 1 bis 11 konfiguriert ist.

14. Elektronische Vorrichtung nach Anspruch 13, wobei die elektronische Vorrichtung Folgendes umfasst: ein mobiles Kommunikationsendgerät oder ein festes Kommunikationsendgerät, wobei optional:
(i) das mobile Kommunikationsendgerät Folgendes umfasst: ein Mobiltelefon, einen Tablet-Computer oder einen Laptop-Computer; und/oder
(ii) das feste Kommunikationsendgerät Folgendes umfasst: einen Desktop-Computer; und/oder
(iii) die elektronische Vorrichtung ist in einer mobilen Einrichtung installiert ist, wobei die mobile Einrichtung über eine Funktion für kontrollierte autonome Bewegung verfügt, wobei die mobile Einrichtung optional einen Maschinenfahrgast (340) umfasst, wobei der Maschinenfahrgast (340) ferner optional Folgendes umfasst: Lieferfahrzeuge, die zu kontrollierter autonomer Bewegung fähig sind, sowie Roboter, die zu kontrollierter autonomer Bewegung fähig sind.

15. Fehlerdiagnosesystem zum Diagnostizieren eines Fehlers bei einer Interaktion zwischen einem Maschinenfahrgast (340) und einem Aufzugssystem (320) über eine Interaktionsmanagementeinrichtung (311), umfassend: eine elektronische Vorrichtung nach Anspruch 13 oder 14 und eine Interaktionsmanagementeinrichtung (311) mit einer spezifischen Kommunikationsschnittstelle; wobei die spezifische Kommunikationsschnittstelle Kommunikationsberechtigungen für die elektronische Vorrichtung öffnet, die eine Autorisierung erhalten hat, sodass Diagnoseinformationen von der Interaktionsmanagementeinrichtung (311) an die elektronische Vorrichtung gesendet werden;
wobei die Diagnoseinformationen optional Folgendes umfassen: Kommunikationsnetzwerksignale, Ausnahmeinformationen zur Interaktionsmanagementeinrichtung; und/oder
wobei die Diagnoseinformationen optional ferner eine oder mehrere der folgenden Informationen umfassen, wenn die Interaktionsverwaltungseinrichtung (311) in Kommunikationsverbindung mit dem Aufzugssystem (320) steht: Kommunikationsverbindungsstatus zwischen der Interaktionsverwaltungseinrichtung (311) und dem Aufzugssystem (320), Ausnahmeinformationen des Aufzugssystems (320) und Anforderungsinformationen und Antwortinformationen, die von einem Maschinenfahrgast (340) und dem Aufzugssystem (320) über die Interaktionsverwaltungseinrichtung (311) gesendet werden.

## Revendications

1. Procédé de diagnostic de défaillance pour l'interaction entre un système d'ascenseur (320) et un passager de machine (340) pour diagnostiquer un défaut dans l'interaction entre le passager de machine (340) et le système d'ascenseur (320) via un appareil de gestion d'interaction (311), comprenant :
l'acquisition des informations de diagnostic à partir du système d'ascenseur (320) et de l'appareil de gestion d'interaction (311) ;
la simulation d'un processus d'interaction entre le passager de la machine (340) et le système d'ascenseur (320) via l'appareil de gestion d'interaction (311) sur la base des informations de diagnostic acquises ; et
le jugement d'un type de défaut d'interaction entre le passager de la machine (340) et le système d'ascenseur (320) sur la base du processus d'interaction simulé.

2. Procédé de diagnostic de défaillance selon la revendication 1, dans lequel les informations de diagnostic comprennent une ou plusieurs des informations suivantes : un signal de réseau de communication, un état de connexion de communication d'un passager de machine simulé avec le système d'ascenseur (320), des informations d'exception du système d'ascenseur (320), des informations d'exception de l'appareil de gestion d'interaction (311), et des informations de demande et des informations de réponse envoyées par le passager de machine simulé et le système d'ascenseur (320) via l'appareil de gestion d'interaction (311) ; et/ou
dans lequel les informations de diagnostic sont acquises directement à partir de l'appareil de gestion d'interaction (311), et les informations de diagnostic sont acquises à partir du système d'ascenseur (320) ; ou les informations de diagnostic pour le système d'ascenseur sont acquises indirectement à partir de l'appareil de gestion d'interaction (311) via la communication de l'appareil de gestion d'interaction (311) avec le système d'ascenseur (320).

3. Procédé de diagnostic de défaillance selon la revendication 1 ou 2, dans lequel le processus d'interaction du passager de la machine simulée avec le système d'ascenseur (320) via l'appareil de gestion d'interaction (311) comprend une ou plusieurs des étapes suivantes :
la simulation d'un processus d'interaction en réseau ;
la simulation d'un processus d'interaction matérielle ; et
la simulation d'un processus d'interaction logicielle.

4. Procédé de diagnostic de défaillance selon la revendication 3, dans lequel :
la simulation d'un processus d'interaction en réseau comprend :
la simulation d'un processus au cours duquel un passager de machine (340) établit une connexion avec un réseau ; et/ou
la simulation d'un processus d'interaction matérielle comprend :
la simulation d'un processus au cours duquel le passager de machine (340) établit une connexion avec un appareil de gestion d'interactions (311) ; et
la simulation d'un processus au cours duquel l'appareil de gestion d'interaction (311) établit une connexion avec un système d'ascenseur (320) ; et/ou
la simulation d'un processus d'interaction logicielle comprend :
la simulation d'un processus au cours duquel le passager de machine (340) a une interaction d'information avec un appareil de gestion d'interactions (311) ; et
la simulation d'un processus au cours duquel l'appareil de gestion d'interactions (311) a une interaction d'information avec le système d'ascenseur (320).

5. Procédé de diagnostic de défaillance selon une quelconque revendication précédente, dans lequel la simulation d'un processus d'interaction du passager de machine (340) avec le système d'ascenseur (320) via l'appareil de gestion d'interactions (311) comprend une ou plusieurs des étapes suivantes :
la simulation d'un processus d'interaction entre un passager de machine (340) et l'appareil de gestion d'interactions (311) ;
la simulation d'un processus d'interaction entre un système d'ascenseur (320) et l'appareil de gestion d'interactions (311).

6. Procédé de diagnostic de défaillance selon la revendication 5, dans lequel la simulation d'un processus d'interaction du passager de machine (340) avec l'appareil de gestion d'interactions (311) comprend une ou plusieurs des étapes suivantes :
la simulation d'un processus au cours duquel un passager de machine (340) établit une connexion avec un réseau ;
la simulation d'un processus au cours duquel un passager de machine (340) établit une connexion avec un appareil de gestion d'interactions (311) ; et
la simulation d'un processus au cours duquel un passager de machine (340) a une interaction d'information avec l'appareil de gestion d'interactions (311).

7. Procédé de diagnostic de défaillance selon la revendication 5 ou 6, dans lequel la simulation d'un processus d'interaction entre un système d'ascenseur (320) et l'appareil de gestion d'interactions (311) comprend une ou plusieurs des étapes suivantes :
la simulation d'un processus au cours duquel l'appareil de gestion d'interactions (311) établit une connexion avec un système d'ascenseur (320) ; et
la simulation d'un processus au cours duquel l'appareil de gestion d'interactions (311) a une interaction d'information avec un système d'ascenseur (320).

8. Procédé de diagnostic de défaillance selon une quelconque revendication précédente, dans lequel le type de défaillance comprend un ou plusieurs éléments parmi : une défaillance de réseau, une défaillance de logiciel et une défaillance de matériel ;
éventuellement, dans lequel :
(i) la défaillance logicielle comprend : les défaillances logicielles des passagers de machine, les défaillances logicielles des appareils de gestion des interactions et les défaillances logicielles du système d'ascenseur ; et/ou
(ii) la défaillance matérielle comprend : les défaillances matérielles des passagers de machine, les défaillances matérielles des appareils de gestion des interactions et les défaillances matérielles du système d'ascenseur.

9. Procédé de diagnostic de défaillance selon une quelconque revendication précédente, comprenant également : l'exécution de toutes les étapes de simulation du processus d'interaction du passager de machine (340) et du système d'ascenseur (320) via l'appareil de gestion d'interactions (311) dans l'ordre, et l'évaluation de tous les types de défaillances d'interaction entre le système d'ascenseur (320) et le passager de machine (340) sur la base du processus d'interaction simulé.

10. Procédé de diagnostic de défaillance selon une quelconque revendication précédente, comprenant également : l'exécution de toutes les étapes de simulation du processus d'interaction du passager de machine (340) et du système d'ascenseur (320) via l'appareil de gestion d'interactions (311) dans l'ordre, et l'évaluation de tous les types de défaillances d'interaction entre le système d'ascenseur (320) et le passager de machine (340) sur la base du processus d'interaction simulé.

11. Diagnostic de défaillance selon une quelconque revendication précédente, comprenant également :
la détermination d'un passager de machine (340) à simuler en saisissant un identifiant d'identité du passager de machine (340) ; et/ou
la fourniture des suggestions de maintenance prédéfinies correspondantes en fonction du type de défaut d'interaction ; et/ou
le déplacement en simulant un itinéraire de déplacement d'un passager de machine (340), et en exécutant respectivement le procédé de diagnostic de défaut dans chaque section de déplacement dans l'itinéraire de déplacement, éventuellement dans lequel la section de déplacement comprend : une première section d'itinéraire dans lequel le passager de machine (340) se déplace vers une première zone d'attente, une deuxième section d'itinéraire dans lequel le passager de machine (340) entre dans un ascenseur cible à partir de la première zone d'attente, une troisième section d'itinéraire dans lequel le passager de machine (340) entre dans une deuxième zone d'attente à partir de l'ascenseur cible, et une quatrième section d'itinéraire dans lequel le passager de machine (340) sort de la deuxième zone d'attente.

12. Support de stockage lisible sur lequel est stockée une application, dans lequel l'application est exécutée par un processeur pour mettre en œuvre les étapes du procédé de diagnostic de défaillance selon l'une quelconque des revendications 1 à 11.

13. Dispositif électronique pour un procédé de diagnostic de défaut pour l'interaction entre un système d'ascenseur (320) et un passager de machine (340), comprenant :
un processeur ;
une mémoire ; et
une application, dans lequel l'application est stockée dans la mémoire et configurée pour être exécutée par le processeur, l'application étant configurée pour : exécuter les étapes du procédé de diagnostic de défaillance selon l'une quelconque des revendications 1 à 11.

14. Dispositif électronique selon la revendication 13, dans lequel le dispositif électronique comprend : un terminal de communication mobile ou un terminal de communication fixe, éventuellement dans lequel :
(i) le terminal de communication mobile comprend : un téléphone portable, une tablette électronique ou un ordinateur portable ; et/ou
(ii) le terminal de communication fixe comprend : un ordinateur de bureau ; et/ou
(iii) le dispositif électronique est installé dans un appareil mobile, l'appareil mobile ayant une fonction de mouvement autonome contrôlé, éventuellement dans lequel l'appareil mobile comprend un passager de machine (340), éventuellement dans lequel le passager de machine (340) comprend : des véhicules de livraison capables de mouvement autonome contrôlé ainsi que des robots capables de mouvement autonome contrôlé.

15. Système de diagnostic de défaillances permettant de diagnostiquer une défaillance dans une interaction entre un passager de machine (340) et un système d'ascenseur (320) via un appareil de gestion d'interactions (311), comprenant : un dispositif électronique selon la revendication 13 ou 14, et un appareil de gestion d'interaction (311) ayant une interface de communication spécifique ; dans lequel l'interface de communication spécifique ouvrant des autorisations de communication au dispositif électronique ayant acquis l'autorisation de telle sorte que des informations de diagnostic soient envoyées de l'appareil de gestion d'interaction (311) au dispositif électronique ;
éventuellement dans lequel les informations de diagnostic comprennent : des signaux de réseau de communication, des informations d'exception d'appareil de gestion d'interactions ; et/ou
éventuellement dans lequel, les informations de diagnostic comprennent également une ou plusieurs des informations suivantes lorsque l'appareil de gestion des interactions (311) est connecté de manière communicative avec le système d'ascenseur (320) : l'état de la connexion de communication entre l'appareil de gestion des interactions (311) et le système d'ascenseur (320), des informations d'exception du système d'ascenseur (320) et des informations de demande et de réponse envoyées par un passager de machine (340) et le système d'ascenseur (320) via l'appareil de gestion des interactions (311).
